# EUROPEAN PATENT SPECIFICATION

(11) **EP 4 756 489 B1**
(45) Date of publication and mention of the grant of the patent: **04.11.2026**
(21) Application number: 24218129.5
(22) Date of filing: 06.12.2024
(51) Int. Cl.: G01S 13/60, B60W 40/10, G01S 13/86, G01S 13/87, G01S 13/931

(54) **OUTLIER DETECTION FOR VEHICLE MOTION ESTIMATION**
AUSREISSERERKENNUNG FÜR FAHRZEUGBEWEGUNGSSCHÄTZUNG
DÉTECTION DE VALEURS ABERRANTES POUR ESTIMATION DE MOUVEMENT DE VÉHICULE

(43) Date of publication of application: 10.06.2026
(73) Proprietor: Volvo Truck Corporation, 405 08 Göteborg (SE)
(72) Inventor: KUMRU, Murat, GÖTEBORG (SE); RYDSTRÖM, Mats, BILLDAL (SE); JONASSON, Mats, PARTILLE (SE)
(74) Representative: Ström & Gulliksson AB

(56) References cited:
- US-A1- 2016 223 661
- LIANG YURAN ET AL: "Tightly Coupled Multimodal Sensor Data Fusion for Robust State Observation With Online Delay Estimation and Compensation", IEEE SENSORS JOURNAL, IEEE, USA, vol. 22, no. 13, 27 May 2022 (2022-05-27), pages 13480 - 13496, XP011913155, ISSN: 1530-437X, [retrieved on 20220530], DOI: 10.1109/JSEN.2022.3177365
- DOER CHRISTOPHER ET AL: "Radar Inertial Odometry With Online Calibration", 2020 EUROPEAN NAVIGATION CONFERENCE (ENC), GERMAN INSTITUTE OF NAVIGATION - DGON, 23 November 2020 (2020-11-23), pages 1 - 10, XP033878793, DOI: 10.23919/ENC48637.2020.9317343

## Description

### TECHNICAL FIELD

The disclosure relates generally to vehicle control. In particular aspects, the disclosure relates to outlier detection for vehicle motion estimation. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In many vehicle operations, precise control of vehicle movement is required or at least beneficial. Such control is often based on estimates of the current motion states of the vehicle. Various approaches to vehicle motion estimation have been proposed. Some of these approaches involve sensors such as radar sensors and inertial sensors that detect various motion parameters of a vehicle. Accurate and reliable estimation or measurement of motion parameters is important for vehicle motion management, in particular to control the vehicle in a safe an efficient manner.

However, estimating motion parameters can be challenging. Any real-world motion estimation system can be susceptible to hardware and software failures, for example due to challenging or inappropriate operating conditions. Radar-based motion estimation is no exception, and can have specific issues relating to, for example, observation of dynamic objects in the surrounding environment, sensor failure, sensor movement, obstruction of the sensor field of view (e.g. due to environmental factors such as precipitation, mud, and dust), and the like.

It is therefore desired to provide systems, methods and other approaches for vehicle motion estimation that attempt to resolve or at least mitigate one or more of these issues.

"Tightly Coupled Multimodal Sensor Data Fusion for Robust State Observation With Online Delay Estimation and Compensation", by Yuran Liang et al, IEEE Sensors Journal, vol. 22, no. 13, 27 May 2022, discloses a framework to exploit the advantages of individual sensor types in vehicle state estimation. The uncertainty of state variables is estimated by the fusion of an inertial measurement unit, a global navigation satellite system, a radar sensor, and a lidar sensor. The multimodal sensor data are processed in a distributed manner in each sensor model at a low level, and the physical quantities from the sensor models are fused centrally by a probabilistic method, namely, a synchronized error-state extended Kaiman filter, at a high level.

US 2016/223661 A1 discloses methods and systems for estimating motion of a vehicle. Radar data pertaining to one or more stationary objects in proximity to the vehicle are obtained via one or more radar units of the vehicle. The motion of the vehicle is estimated using the radar data via a processor of the vehicle.

"Radar Inertial Odometry With Online Calibration", by Christopher Doer et al, 2020 European Navigation Conference, German Institute of Navigation, 23 November 2020, pages 1-10, discloses the use of an inertial measurement unit and a millimetre wave frequency modulated continuous wave radar sensor for localization in visually degraded and GNSS denied environments for autonomous robotics. A filter-based 3D Radar Inertial Odometry approach is presented which enables the online estimation of the extrinsic calibration of the radar sensor.

### SUMMARY

This disclosure provides systems, methods and other approaches for determining the presence of one or more outliers in a plurality of measurements made by a motion estimation system of a vehicle. In particular, measurements made by a number of radar and inertial sensors can be analysed to determine if any of the sensors is outputting incorrect, or otherwise irrelevant or uninteresting, measurements. Furthermore, the specific sensor(s) that is producing the outlier(s) can be identified. In this way, more accurate estimations of vehicle motion can be determined by excluding outlier measurements, and it can be indicated to an operator that maintenance of the sensor(s) is required.

According to a first aspect of the disclosure, there is provided a system comprising: one or more radar sensors configured to obtain measurements relating to one or more first unknown motion parameters of a vehicle; one or more inertial sensors configured to obtain measurements relating to one or more second unknown motion parameters of the vehicle, wherein the total number of sensors is at least one more than the total number of unknown motion parameters; and processing circuitry configured to: acquire a measurement of each of the first unknown motion parameters from the one or more radar sensors; acquire a measurement of each of the second unknown motion parameters from the one or more inertial sensors; determine an estimated value for each of the first and second unknown motion parameters based on the received measurements; determine a residual between the estimated values and the received measurements; and determine the presence of one or more outliers in the plurality of measurements if the determined residual fails to meet an acceptance criterion.

The first aspect of the disclosure may seek to provide a system capable of determining (or detecting) the presence of incorrect, or otherwise irrelevant or uninteresting, measurements made by a motion estimation system of a vehicle. A technical benefit may include that measurements made by a number of radar and inertial sensors can be analysed to determine if any of the sensors is outputting incorrect measurements. Furthermore, the specific sensor(s) that is producing the outlier(s) can be identified. In this way, more accurate estimations of vehicle motion can be determined by excluding outlier measurements, and it can be indicated to an operator that maintenance of the sensor(s) is required.

Optionally in some examples, including in at least one preferred example, the one or more radar sensors comprise one or more ground speed radar sensors. A technical benefit may include that the presence of incorrect, irrelevant, or uninteresting measurements made by ground speed radar sensors of a motion estimation system can be determined.

Optionally in some examples, including in at least one preferred example, the first unknown motion parameters comprise one or more of a longitudinal velocity of the vehicle, a lateral velocity of the vehicle, a vertical velocity of the vehicle, a yaw rate of the vehicle, a roll rate of the vehicle, and a pitch rate of the vehicle. A technical benefit may include that the presence of incorrect, irrelevant, or uninteresting measurements of a number of different motion parameters of the vehicle made by a one or more radar sensors can be determined.

Optionally in some examples, including in at least one preferred example, the second unknown motion parameters comprise one or more of a yaw rate of the vehicle, a roll rate of the vehicle, and a pitch rate of the vehicle. A technical benefit may include that the presence of incorrect, irrelevant, or uninteresting measurements of a number of different motion parameters of the vehicle made by a one or more inertial sensors can be determined.

Optionally in some examples, including in at least one preferred example, the processing circuitry is configured to acquire a measurement from each of the sensors. A technical benefit may include that all data sources in the motion estimation system can be used, enabling overdetermination of the system and the identification of any inconsistency in measurements.

Optionally in some examples, including in at least one preferred example, the received measurements are obtained by the sensors at a same time instant. A technical benefit may include that, by taking measurements simultaneously, it is ensured that the motion parameters measured by the sensors relate to the same behaviour of the vehicle and can be readily compared to identify any inconsistency.

Optionally in some examples, including in at least one preferred example, the processing circuitry is configured to determine an estimated value for each of the one or more unknown motion parameters using a pseudo inverse of a measurement matrix. A technical benefit may include that an accurate estimate of the state of the vehicle can be provided by inverting a measurement process that may not be directly invertible due to noise, redundancy, or incomplete information.

Optionally in some examples, including in at least one preferred example, each subset of a measurement matrix has full column rank, wherein each subset omits one of the received measurements. A technical benefit may include that a unique and/or proper solution of the associated linear system can be determined as the system is overdetermined and there is a redundant source of information for each measurement.

Optionally in some examples, including in at least one preferred example, the system comprises three or more sensors, and the processing circuitry is configured to: receive a measurement from each of the three or more sensors, wherein the total number of sensors is at least two more than the total number of unknown motion parameters; determine a plurality of subsets of the received measurements, wherein each subset omits one of the received measurements; determine an estimated value for each of the first and second unknown motion parameters for each determined subset of the received measurements; determine a residual between the respective estimated values and each determined subset of the received measurements; and identify one or more outliers in the plurality of measurements based on the determined residuals. A technical benefit may include that the specific sensor(s) that is producing the outlier(s) can be identified, enabling more accurate estimations of vehicle motion to be determined and for appropriate action, e.g. maintenance of the sensor(s), to be performed.

Optionally in some examples, including in at least one preferred example, the processing circuitry is further configured to provide one or more of information relating to the one or more identified outliers and an estimate of vehicle motion via a user interface for an operator of the vehicle. A technical benefit may include that the erroneous measurements can be taken into account when controlling the vehicle, e.g. via a driver input, and appropriate action, e.g. maintenance of the sensor(s), can be performed.

Optionally in some examples, including in at least one preferred example, the processing circuitry is further configured to cause an action by a motion management system of the vehicle in response to determining the presence of one or more outliers. A technical benefit may include that an initial motion estimate can be discounted when controlling the vehicle, and vehicle motion can be estimated based on other inputs.

According to a second aspect of the disclosure, there is provided a vehicle comprising the system of the first aspect. The second aspect of the disclosure may seek to provide a vehicle capable of determining the presence of incorrect, irrelevant, or uninteresting measurements made by a motion estimation system of the vehicle, in particular measurements made by a number of radar and inertial sensors.

According to a third aspect of the disclosure, there is provided a computer-implemented method comprising: acquiring, by processing circuitry of a computer system, a measurement of each of one or more first unknown motion parameters of a vehicle based on one or more radar sensors; acquiring, by the processing circuitry, a measurement of each of one or more second unknown motion parameters of the vehicle based on one or more inertial sensors, wherein the total number of sensors is at least one more than the total number of unknown motion parameters; determining, by the processing circuitry, an estimated value for each of the first and second unknown motion parameters based on the received measurements; determining, by the processing circuitry, a residual between the estimated values and the received measurements; and determining, by the processing circuitry, the presence of one or more outliers in the plurality of measurements if the determined residual fails to meet an acceptance criterion.

The third aspect of the disclosure may seek to provide a method capable of determining (or detecting) the presence of incorrect, or otherwise irrelevant or uninteresting, measurements made by a motion estimation system of a vehicle. A technical benefit may include that measurements made by a number of radar and inertial sensors can be analysed to determine if any of the sensors is outputting incorrect measurements. Furthermore, the specific sensor(s) that is producing the outlier(s) can be identified. In this way, more accurate estimations of vehicle motion can be determined by excluding outlier measurements, and it can be indicated to an operator that maintenance of the sensor(s) is required.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to determine the presence of incorrect, irrelevant, or uninteresting measurements made by a motion estimation system of the vehicle, in particular measurements made by a number of radar and inertial sensors.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update to determine the presence of incorrect, irrelevant, or uninteresting measurements made by a motion estimation system of the vehicle, in particular measurements made by a number of radar and inertial sensors.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a side view of a vehicle according to an example of the disclosure.
**FIG. 2** schematically shows a top view of a vehicle comprising a motion estimation system according to an example of the disclosure.
**FIG. 3A** and **3B** geometrically illustrate linear systems comprising a number of state variables and measurements.
**FIG. 4** is a flow chart of a computer-implemented method according to an example of the disclosure.
**FIG. 5** illustrates the results of testing of a vehicle motion estimation system.
**FIG. 6** illustrates motion estimates obtained without any outlier identification mechanism.
**FIG. 7** illustrates motion estimates obtained by excluding the identified outliers.
**FIG. 8** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

In many vehicle operations, precise control of vehicle movement is required. Such control is often based on estimates of the current motion states of the vehicle. Accurate and reliable estimation or measurement of motion parameters is important for vehicle motion management, in particular to control the vehicle in a safe an efficient manner. However, estimating motion parameters can be challenging. Any real-world motion estimation system can be susceptible to hardware and software failures, for example due to challenging or inappropriate operating conditions. Radar-based motion estimation is no exception, and can have specific issues relating to, for example, observation of dynamic objects in the surrounding environment, sensor failure, sensor movement, obstruction of the sensor field of view (e.g. due to environmental factors such as precipitation, mud, and dust), and the like.

To remedy this, systems, methods and other approaches are provided for determining (or detecting) the presence of one or more outliers in a plurality of measurements made by a motion estimation system of a vehicle. In particular, measurements made by a number of radar and inertial sensors can be analysed to determine if any of the sensors is outputting incorrect, or otherwise irrelevant or uninteresting, measurements. Furthermore, the specific sensor(s) that is producing the outlier(s) can be identified. In this way, more accurate estimations of vehicle motion can be determined by excluding outlier measurements, and it can be indicated to an operator that maintenance of the sensor(s) is required.

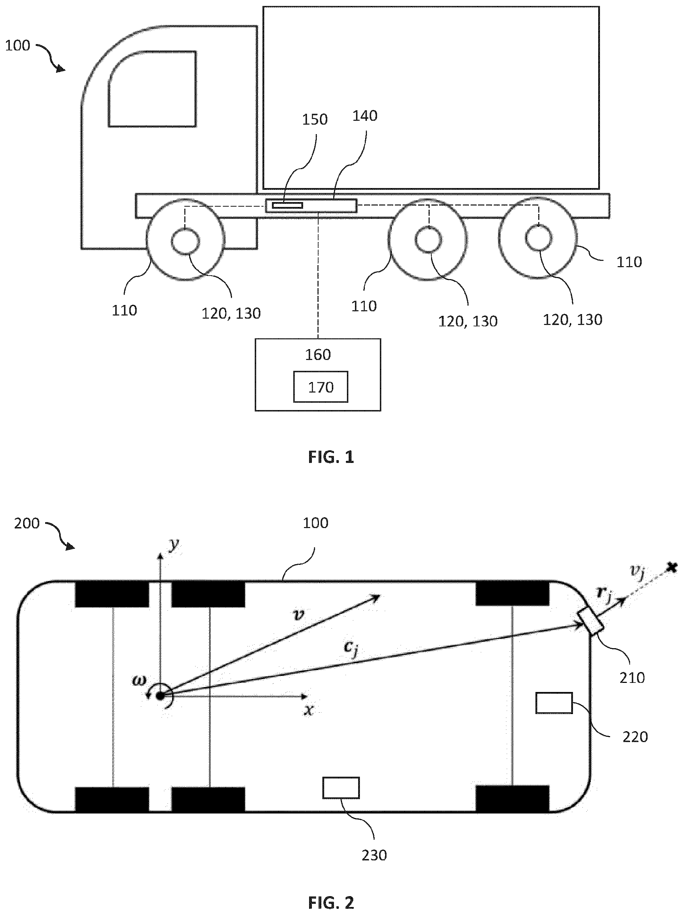

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110.** Each wheel is provided with a tyre. Whilst three axles are shown, it will be appreciated that any suitable number of axles may be provided. It will also be appreciated that any number of the axles may be driven axles. The vehicle **100** normally comprises a steered axle, or more than one steered axle.

The vehicle **100** may comprise one or more sources of propulsion. For example, the vehicle **100** may comprise one or more electrical machines **120** such as electric motors and/or generators. The vehicle **100** may comprise one or more batteries (not shown) configured to provide power to the electrical machines **120.** In some examples, the vehicle **100** may also include another source of propulsion, for example an internal combustion engine (ICE). The vehicle 100 also comprises a drivetrain (not shown) to deliver mechanical power from the propulsion source (the electrical machines **120** or the ICE) to the wheels **110.** The vehicle **100** may be driven solely by ICE, solely by electric machines, or by a combination of electric and combustion engine-based motors.

The electrical machines **120** are configured to drive, e.g. provide torque and/or steering to, one or more axles or individual wheels **110** of the vehicle **100.** The electrical machines **120** can supply either a positive (propulsion) or negative (braking) force. The use of electrical machines **120** to supply a negative force is known as regenerative braking, in which case the electrical machines **120** may be operated as generators, in order to recover energy during braking.

Furthermore, the vehicle **100** may comprise one or more sets of service brakes **130.** The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines **120** can be stored in the batteries, and so regenerative braking may generally be preferred over the use of service brakes. The electrical machines **120,** service brakes **130,** and ICE of a vehicle **100** may be referred to as actuators or motion support devices (MSDs) of the vehicle **100.**

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100.** A trailing unit is generally used to store goods that are being transported by the vehicle combination **100.** A trailing unit may be a truck, trailer, dolly and the like. A trailing unit may also provide propulsion to the vehicle combination **100.** In such examples, each unit may comprise its own electrical machines **120,** batteries, service brakes **130,** and the like. In this way, all units may provide propulsion to the vehicle combination **100.**

The vehicle **100** may include a controller **140** comprising processing circuitry **150.** The controller **140** is configured to control components of the vehicle, for example the electrical machines **120.** **FIG. 1** shows a common controller **140** for all electrical machines **120** of the vehicle **100,** however it will be appreciated that each electrical machine **120** may have its own respective controller **140.** In many cases, the controller **140** may be implemented in the structure of the electrical machine **120** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** (or its processing circuitry **150)** may receive control signals from a global controller **160** comprising processing circuitry **170.** The global controller **160** may be a vehicle control unit configured to perform various vehicle (unit) control functions, such as vehicle motion management. The global controller **160** may be local to the vehicle **100,** for example implemented as part of the controller **140,** or may be a remote system, implemented at a distance from the vehicle **100.** The global controller **160** may be communicatively coupled to the controller **140** in any suitable way, for example via a circuit or any other wired, wireless, or network connection known in the art. Furthermore, the communicative coupling may be implemented as a direct connection between the controller **140** and the global controller **160,** or may be implemented as a connection via one or more intermediate entities.

One function of the controller **140** and the global controller **160** is to provide control inputs for the vehicle **100,** for example torque, force, or slip requests. These control inputs may be determined based on an estimation of vehicle motion provided by a vehicle motion estimation system. It is therefore important that the output of such a motion estimation system is reliable to enable the resulting control inputs to be accurate and safe.

**FIG. 2** schematically shows a motion estimation system **200** for a vehicle, such as the vehicle **100.** The motion estimation system **300** comprises a number of data sources, including one or more radar sensors **210** and one or more inertial sensors **220,** as well as processing circuitry **230** (compare with **150** and **170** of **FIG. 1****).** The vehicle motion is represented in a coordinate system where the x-direction is a longitudinal direction of motion and the y-direction is a lateral direction of motion of the vehicle **100.** The translational and the rotational velocity vectors of the vehicle 100 with respect to the ground are represented by *v* 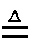 [*vₓ v_{y}*]*^{T}* and ***ω*** 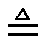 [0 0 *ω_{z}*]*^{T}*, respectively. Whilst the motion estimation system **200** is represented in two dimensions, it will be appreciated that the system **200** may also operate in three dimensions.

The radar sensor **210** comprises a radar antenna and/or transceiver configured to receive and/or transmit radio waves. In particular, a radar sensor **210** emits a radar beam outward towards a radar target X and receives radar backscatter in the form of reflected radio waves from the target X. The radar sensor(s) **210** may be configured to emit a radar beam in any suitable direction. The position of the *j^{th}* radar in the vehicle coordinate frame is denoted by ${c}_{j} ≜ {\left[{c}_{j}^{x} {c}_{j}^{y}\right]}^{T}$ relative to a suitable reference point. The corresponding unit-length observation vector is indicated by ${r}_{j} ≜ {\left[{r}_{j}^{x} {r}_{j}^{y}\right]}^{T}$, and is dependent on the transmission properties and orientation of the radar sensor **210.**

In some examples, the radar sensor(s) **210** is a ground speed radar sensor configured to emit a radar beam towards a ground surface supporting the vehicle **100,** in particular to the target X where the radar beam intersects ground surface. By analysing properties of the radio waves reflected from the target X, such as the shift in the frequency of the returned signal relative to the transmitted signal (the so-called Doppler shift), different motion parameters can be determined, as known in the art. For example, the radar sensor(s) **210** may be configured to obtain measurements relating to one or more of a longitudinal velocity *vₓ* of the vehicle **100,** a lateral velocity *v_{y}* of the vehicle **100,** a vertical velocity *v_{z}* of the vehicle **100,** a yaw rate *ω_{z}* of the vehicle **100,** a roll rate *ωₓ* of the vehicle **100,** and a pitch rate *ω_{y}* of the vehicle **100.** This can be performed by processing circuitry, such as processing circuitry **230,** communicatively coupled to the radar sensor(s) **210.**

In the example of **FIG. 2****,** the radar sensor **210** is mounted at a forward position of the vehicle **100.** It may be envisaged that the radar sensor(s) **210** may be mounted elsewhere in the vehicle **100,** for example in a wheel **110** (e.g. on a wheel rim, in part of the wheel hub, or in part of the tyre), as long as the radar sensor(s) **210** is capable of receiving reflected radio waves from the target X. Whilst a single radar sensor **210** is shown in **FIG. 2****,** multiple radar sensors **210** may be present in the system **200.** In this case, each radar sensor **210** may comprise a radar antenna communicatively coupled to common processing circuitry **230.** In another example, each radar sensor **210** may have its own dedicated processing circuitry **230.** In some examples, a combination of common and dedicated processing circuitry **230** may be provided. This disclosure is not limited to any particular radar sensor architecture, nor any particular processing circuitry architecture.

It is noted that a radar sensor **210** generally illuminates an area and not a localized small point, since the radar beam is normally not a true laser-like or pencil-shaped beam. Thus, even single-beam radar sensors simultaneously collect radar backscatter from different observation directions due to the spread of the main radar transmission lobe, i.e., due to the shape of the main lobe of the radar sensor antenna including effects of, e.g., the radar front end on the overall transmission pattern of the radar sensor. The radar sensor(s) **210** will therefore see a spectrum of different Doppler velocities corresponding to different viewing angles. The extent of the spread depends mainly on the antenna characteristics of the radar sensor(s) **210,** but also the reflection properties of the environment and the vehicle components in the near-field of the radar sensor(s) **210.** The radar beam may also penetrate slightly below the immediate surface of the ground.

Returning to **FIG. 2****,** the one or more inertial sensors **220** may comprise any suitable inertial sensor known in the art. For example, the inertial sensor(s) **220** may comprise one or more accelerometers, gyroscopes, inertial measurement units, and the like. The inertial sensor(s) **220** are configured to determine various motion parameters of the vehicle **100,** as known in the art. In particular, the inertial sensor(s) **220** may be configured to determine one or more of a yaw rate *ω_{z}* of the vehicle **100,** a roll rate *ωₓ* of the vehicle **100,** and a pitch rate *ω_{y}* of the vehicle **100.** Assuming the vehicle **100** is a rigid body, the inertial sensor(s) **220** may be placed at any suitable position on the vehicle **100.**

In some examples, a sensor (i.e. a radar sensor **210** and/or an inertial sensor **220)** and processing circuitry **230** may be provided in a single, integrated unit. In these examples, the sensor(s) may be communicatively coupled to the processing circuitry **230** via any suitable circuit or wired network connection known in the art. In some examples, the sensor(s) and processing circuitry **230** may be provided in separate units. In these examples, the sensor(s) may be communicatively coupled to the processing circuitry **230** via any suitable wireless or network connection known in the art. In some examples, the processing circuitry **230** may be implemented by the processing circuitry **150** of the controller **140,** or the processing circuitry **170** of the global controller **160** described in relation to **FIG. 1****.** The sensor(s) may be communicatively coupled to the controller **140,** and/or the global controller **160** in any suitable way, for example via a circuit or any other wired, wireless, or network connection known in the art. All communicative couplings may be implemented as a direct connection or via one or more intermediate entities.

Based on the structure and configuration of the motion estimation system **200,** the various motion parameters can be related to each other. For example, the Doppler velocity *vⱼ* observed by a radar sensor **210** will be dependent on a combination of translational and rotational motion of the vehicle **100.** The Doppler velocity *vⱼ* can be expressed as follows: ${v}_{j} = - {v}_{x} {r}_{j}^{x} - {v}_{y} {r}_{j}^{y} + {ω}_{z} \left({c}_{j}^{y}{r}_{j}^{x}-{c}_{j}^{x}{r}_{j}^{y}\right)$ (1)

Accordingly, a linear relation between the Doppler velocity *vⱼ* and the state vector ***x*** can be expressed as follows: ${v}_{j} = {C}_{j} x$ (2) where ***x*** 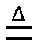 [*vₓ v_{y} ω_{z}*]*^{T}* and ${C}_{j} ≜ \left[-{r}_{j}^{x}-{r}_{j}^{y}\left({c}_{j}^{y}{r}_{j}^{x}-{c}_{j}^{x}{r}_{j}^{y}\right)\right]$. *Cⱼ* is a known row vector, which may be determined according to the mounting position and orientation of the radar sensor **210** on the vehicle **100.**

Additionally, a measurement acquired by an inertial sensor **220** observing the yaw rate *ω_{z}* can be expressed as follows: ${y}_{g} = \left[0 0 1\right] x$ (3)

The available measurements can be concatenated into an augmented measurement vector ***y***, which is related to the state vector by the following linear model: $y = C x$ (4) where the measurement vector is defined by ***y*** 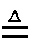 [*y*₁ ... *yₙ*]*^{T}*, where ${\left\{{y}_{j}\right\}}_{j = 1}^{n}$ indicates measurements from the *j^{th}* sensor, the total number of sensors (or sources of information) is *n,* and *C* is known as the measurement matrix. Here, the individual elements of the measurement vector include ***y*** values of one or more motion parameters of the vehicle (e.g. the Doppler velocity *vⱼ* from the radar sensor(s) **210** and the yaw rate *ω_{z}* from the inertial sensor(s) **220).** In some examples, the measurements correspond to the same time instant (i.e. they are obtained by the sensors **210, 220** simultaneously).

To obtain a unique and/or proper solution of the linear system given in equation (4), the matrix of each subset of the measurement matrix *C* must have full column rank. A subset of the measurement matrix *C* omits one of the received measurements (i.e. each subset includes n - 1 measurements). If the matrix of each subset has full column rank, the measurement matrix *C* also has full column rank. This indicates that the system is overdetermined, i.e. there are a sufficient number of measurements and/or data sources to determine the unknown motion parameters, as will be understood by the skilled person. For all subsets formed by excluding one of the measurements, it is required that rank(*C* _{\ *j*}) = *m*, where *C* _{\ *j*} is the measurement matrix of the subsets excluding the *j*^{th} measurement: $\left.{C}_{\ j}≜\left[\begin{matrix}⋮ \\ {j}^{th} row \\ ⋮\end{matrix}\right]\right\} C$ (5)

For such a system, an estimate ***x̂*** of the state vector ***x*** can be computed as follows: $\hat{x} = {C}^{+} y ,$ (6) where *C*⁺ is the pseudo inverse of the measurement matrix *C*, and is defined by: ${C}^{+} = {\left({C}^{T}C\right)}^{- 1} {C}^{T} .$ (7) In a special case, where the number of measurements is equal to the number of states, the measurement matrix *C* is a square matrix, which leads to *C*⁺ *= C*⁻¹ ⇒ *x̂ = C*⁻¹ *y*.

As discussed above, in any real-world system, sensors can malfunction or be impeded from capturing accurate measurements. When the measurement vector ***y*** includes one or more outlier measurements, the corresponding estimate ***x̂*** is typically corrupted by the erroneous information. It is therefore desired to provide an approach that can detect the existence of outliers in the measurement vector ***y**,* and further to identify which measurements are outliers in order to reject them from the provision of the estimate ***x̂*.** This can be achieved by determine a discrepancy between the measurements and the computed estimate, as detailed below.

Assume a linear system defined as in equation (4), where $x ∈ {ℝ}^{m} , y ∈ {ℝ}^{n}$, $C ∈ {ℝ}^{n \times m}$ . Using the pseudo inverse of the measurement matrix *C* defined in equation (7), the estimate *x̂* can be determined using equation (6). This essentially minimizes the following cost function consisting of the sum of squared residuals: $J \left(\hat{x}\right) = \left‖y-C \hat{x}\right‖$ (8) This is often referred to as a least squares estimation (LSE).

Accordingly, the discrepancy between the measurements in the measurement vector ***y*** and the estimate ***x̂*** can be given by: ${ϵ}_{y} = y - C \hat{x}$ (9) where *ε_{y}* is called the measurement residual. The measurement residual *ε_{y}* indicates the least squares error of the system and reveals the consistency of the measurements for the given system.

Based on this formulation, the presence of one or more outliers in the measurement vector ***y*** can be detected. In particular, a measurement can be obtained by each of the data sources (e.g. each of the one or more radar sensors **210** and each of the one or more inertial sensors **220).** Given a number of unknown motion parameters *m, n* measurements are obtained. As discussed above, *n* is the total number of data sources (e.g. sensors **210, 220).** The total number of data sources/sensors **210, 220** (and therefore the total number of measurements) is at least one more than the total number of unknown motion parameters, i.e. *n* > *m*. For example, the total number of unknown parameters *m* may be three or more, in which case the total number of sensors *m* is four or more. Consequently, it is possible to identify any inconsistency in the measurements.

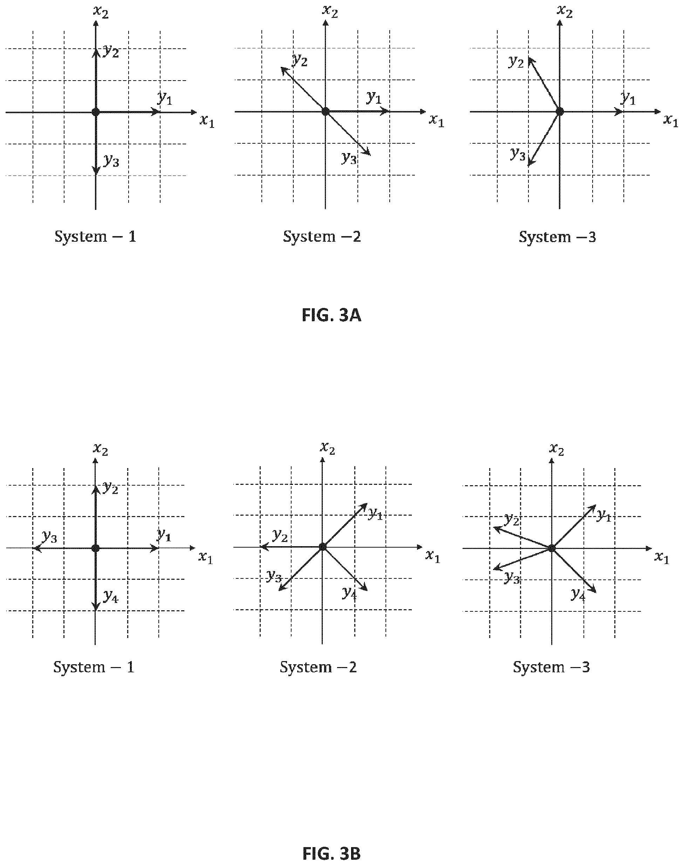

**FIG. 3A** geometrically illustrates three linear systems, which each comprise two state variables, ***x** =* [*x*₁ *x*₂]*^{T}* and three measurements, ***y** =* [*y*₁ *y*₂ *y₃*]*^{T}.* In System-1 and System-2, if y₁ is excluded from the measurement vector, the range space becomes 1-dimensional (equivalently, the rank of the corresponding sub-measurement matrix *C* is 1). Therefore, it cannot be determined whether y₁ is an outlier in these systems. System-3, however, complies with the aforementioned requirements, and it is therefore possible to detect the presence of an outlier regardless of which value it is.

In a system that complies with these requirements, an estimate *x̂* of the unknown motion parameters can be determined, for example based on equations (6) and (7). In particular, using the pseudo inverse of the measurement matrix *C*, an estimation of each of the one or more unknown motion parameters can be obtained. The measurement residual *ε*_{y} between the estimate ***x̂*** and the received measurements ***y*** can then be determined based on equation (9). In the case that the estimate ***x̂*** is a least squares estimation the unknown motion parameters, the residual represents a least squares error of the system.

Once the measurement residual ***ε**_{y}* has been determined, the presence of one or more outliers in the measurements can be determined (or detected) by comparing the measurement residual ***ε***_{y} to an acceptance criterion, e.g. a threshold. If the measurement residual ***ε***_{y} is acceptable, the estimate *x̂* can be provided as output and it can be stated that there is no outlier in the measurements. If the measurement residual ***ε***_{y} is not acceptable, further action can be taken, for example by discounting the estimate ***x̂***, notifying that maintenance of the sensors is required, and the like. In some examples, the identity of the outlier(s) can be determined, as will be discussed below.

The comparison of the measurement residual ***ε***_{y} to an acceptance criterion can be performed in any suitable manner. For example, the largest element and/or the norm of the measurement residual ***ε***_{y} can be compared to a threshold. In another example, outliers can be detected based on a statistical analysis of the measurement residual ***ε**_{y}*. For example, accounting for known sensor noise characteristics, the measurement vector y can be expressed as follows: $y = C x + e , e ∼ N \left(0, R\right)$ (10) where, e represents the random sensor noise, which is Gaussian distributed with zero mean and covariance R. Then, the measurement residual ***ε***_{y} can be expressed as: $\begin{matrix}{ϵ}_{y} & = y - C \hat{x} \\ & = \left(C x+e\right) - {CC}^{+} \left(C x+e\right) \\ & = C x + e - C x - {CC}^{+} e \\ & = {{\left({I}_{n}-{CC}^{+}\right)}_{︸}}_{≜ Δ} e\end{matrix}$ (11) where *Iₙ* is an n × n identity matrix. Equation (11) implies the following distribution for the measurement residual ***ε**_{y}*: ${ϵ}_{y} ∼ N \left(0,Δ R {Δ}^{T}\right) .$ (12) From this, the statistic T can be determined as follows: $T \left(y\right) ≜ {{ϵ}_{y}}^{T} {\left(Δ R {Δ}^{T}\right)}^{- 1} {ϵ}_{y} ∼ {χ}^{2} \left(n\right) ,$ (13) which has a chi-square distribution with n degrees of freedom. The existence of outliers can be determined by considering this as a threshold such that: $T \left(y\right) > {{χ}_{α}}^{2} \left(n\right)$ (14) This method is commonly referred to as hypothesis/chi-squared testing or gating.

This approach will now be exemplified in terms of a number of examples. In the following examples, there are two state variables, i.e., ***x*** 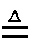 [*x*₁ *x*₂]^{T}, where the true value of the state vector is arbitrarily selected to be *x*ₜᵣᵤₑ 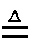 [1 1]^{T}.

### Example-1

To be able to compute the pseudo inverse of the measurement matrix *C*, at least two measurements are required. The most straightforward realization of such a system is given by: $y ≜ \left[\begin{matrix}1 & 0 \\ 0 & 1\end{matrix}\right] x$

| ***y*** | ***x̂*** | ***ε***_{y} | **Observation** |
|---|---|---|---|
| [1 1]^{T} | [1 1]^{T} | [0 0]^{T} | All measurements are inliers. |
| [1 10]^{T} | [1 10]^{T} | [0 0]^{T} | There is an outlier, hence the estimate is corrupted. However, detecting the existence of the outlier is not possible, as the measurement residual does not indicate any inconsistency. |

Note that in this example, the total number of measurements is the same the total number of unknown motion parameters, i.e. *n* = *m*, and so the presence of the outlier cannot be detected.

### Example-2

In this example, one more measurement is incorporated into the system: $y ≜ \left[\begin{matrix}1 & 0 \\ 0 & 1 \\ 1 & 0\end{matrix}\right] x$

| ***y*** | ***x̂*** | ***ε_{y}*** | **Observation** |
|---|---|---|---|
| [1 1 1]^{T} | [1 1]^{T} | [0 0 0]^{T} | All measurements are inliers. |
| [10 1 1]^{T} | [5.5 1]^{T} | [4.5 0 - 4.5]^{T} | The existence of the outlier can be detected. |
| [1 1 10]^{T} | [5.5 1]^{T} | [-4.5 0 4.5]^{T} | |
| [1 10 1] | [1 10]^{T} | [0 0 0]^{T} | There is an outlier, hence the estimate is corrupted. However, detecting the existence of the outlier is not possible, as the measurement residual does not indicate any inconsistency. |

In this example, the total number of measurements is greater than the total number of unknown motion parameters, i.e. *n* > *m*, and so the presence of the outlier can be detected in some cases.

### Example-3

It is also possible to define an efficient and/or cost-effective system, using only three sensors, which is still capable of detecting any outlier: $y ≜ \left[\begin{matrix}1 & 0 \\ 0 & 1 \\ 1 & 1\end{matrix}\right] x$

| ***y*** | ***x̂*** | *ε*_{y} | **Observation** |
|---|---|---|---|
| [1 1 2]^{T} | [1 1]^{T} | [0 0 0]^{T} | All measurements are inliers. |
| [10 1 2]^{T} | [7 - 2]^{T} | [3 3 - 3]^{T} | In all cases, the existence of the outlier can be detected. |
| [1 10 2]^{T} | [-2 7]^{T} | [3 3 - 3]^{T} | |
| [1 1 10]^{T} | [3.7 3.7]^{T} | [-2.7 - 2.7 2.6]^{T} | |

In an extension of the approach outlined above, it is possible to identify not only the presence of an outlier, but also which one of the measurements is the outlier. Thereafter, a reliable estimate *x̂* can be determined by excluding the outlier measurement from the measurement vector ***y*.**

To achieve this, the total number of data sources (e.g. sensors **210, 220),** and therefore the total number of measurements, is at least two more than the total number of unknown motion parameters, i.e. n > *m*+1. For example, the total number of unknown motion parameters *m* may be three or more, in which case the total number of sensors *m* is five or more. Any suitable combination of radar sensors **210** and inertial sensors **220** can be used to provide the sufficient number of measurements. It will be noted that, as the minimum number of unknown motion parameters is one, the minimum total number of data sources is three.

In this approach, a measurement can be obtained by each of the (three or more) sensors **210, 220.** A plurality of subsets of the measurements is then determined, where each subset omits one of the received measurements (i.e. each subset includes *n* - 1 measurements). The number of subsets correspond to the number of measurements *n* (i.e. there is a subset omitting each one of the measurements *n*). Each subset is required to be able to identify the existence of any outlier, i.e. for each subset, the number of measurements must be at least one more than the total number of unknown motion parameters, and each further subset (where each further subset omits one of the received measurements from an initial subset) must have full column rank.

For each subset excluding the *j*^{th} measurement, a corresponding estimate *x̂ ^{j}* of the unknown motion parameters can be determined, for example in the manner discussed above. A corresponding measurement residual ***ε**_{y}^{j}* between the estimate ***x̂****^{j}* and the subset of measurements is then determined, for example based on equation (9). This results in a plurality of measurement residuals ***ε**_{y}^{j}*, one for each subset of the measurements. Based on the determined measurement residuals ***ε**_{y}^{j}*, the identity of any outlier(s) in the system can be determined. For example, it can be assumed that the subset that produces the most insignificant measurement residual ***ε**_{y}^{j}* should be that formed by excluding the outlier measurement. The corresponding estimate ***x̂****^{j}* can be considered more reliable than the initial estimate ***x̂****,* having identified and excluded the outlier measurement.

**FIG. 3B** geometrically illustrates three linear systems, which each comprise two state variables, ***x** =* [*x*₁ *x*₂]*^{T}* and four measurements, ***y** =* [*y*₁ *y*₂ *y*₃ *y₄*]*^{T}.* Due to having linearly dependent pairs of observations in System-1 (*y*₁, *y*₃ and *y*₂, *y*₄) and System-2 (*y*₁, *y*₃), it is not possible to identify and reject any outlier measurement. However, satisfying the given requirements, System-3 is able to identify an outlier in all cases.

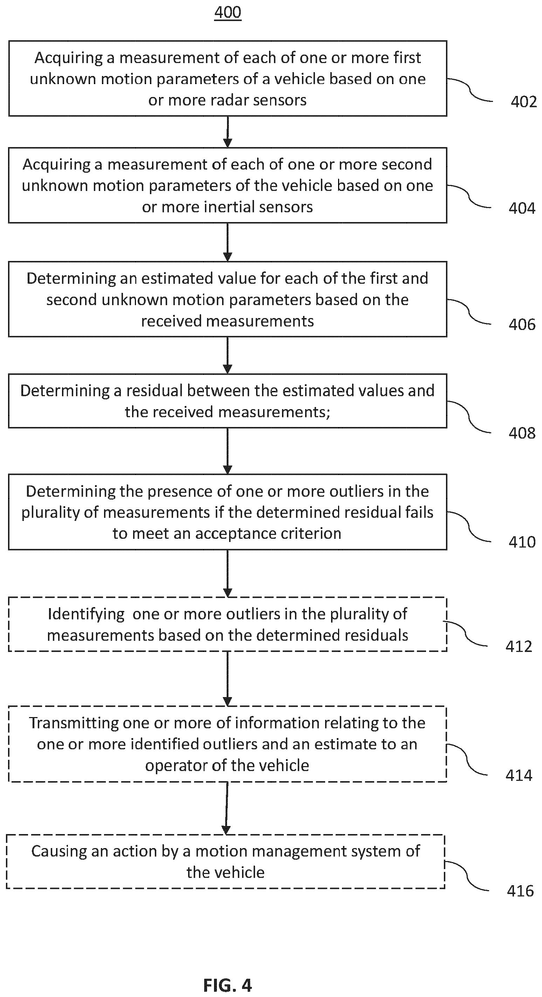

**FIG. 4** is a flow chart of a computer-implemented method **400** according to an example. The method **400** is for determining (or detecting) the presence of one or more outliers in a plurality of measurements made by a motion estimation system of a vehicle. The method **400** enables outliers to be detected and identified in order to provide more accurate estimations of vehicle motion. The method **400** may be implemented by processing circuitry of a computer system (e.g., the processing circuitry **150** of the controller(s) **140,** the processing circuitry **170** of the global controller **160** described in relation to **FIG. 1****,** or the processing circuitry **230** of the motion estimation system **200** described in relation to **FIG. 2****).**

At **402,** a measurement is acquired relating to one or more first unknown motion parameters of a vehicle **100** from each of one or more radar sensors **210.** As discussed above, the radar sensor(s) **210** may be configured to obtain measurements relating to one or more of a Doppler velocity *vⱼ*, a longitudinal velocity *vₓ* of the vehicle **100,** a lateral velocity *v_{y}* of the vehicle **100,** a vertical velocity *v_{z}* of the vehicle **100,** a yaw rate *ω_{z}* of the vehicle **100,** a roll rate *ωₓ* of the vehicle **100,** and a pitch rate *ω_{y}* of the vehicle **100.** In some examples, a first motion parameter may be determined by processing circuitry local to the radar sensor(s) **210** and provided to the processing circuitry **150, 170, 230.** In some embodiments, the radar sensor(s) **210** may detect a Doppler velocity *vⱼ*, which is further processed by the processing circuitry 150, **170, 230** to determine values for one or more first motion parameters.

At **404,** a measurement is acquired relating to one or more second unknown motion parameters of the vehicle **100** from each of one or more inertial sensors **220.** As discussed above, the inertial sensor(s) **220** may be configured to obtain measurements relating to one or more of a yaw rate *ω_{z}* of the vehicle **100,** a roll rate *ωₓ* of the vehicle **100,** and a pitch rate *ω_{y}* of the vehicle **100.** In some examples, a second motion parameter may be determined by processing circuitry local to the inertial sensor(s) **220** and provided to the processing circuitry **150, 170, 230.**

As discussed above, total number of data sources/sensors **210, 220** (and therefore the total number of measurements) is at least one more than the total number of unknown motion parameters, i.e. *n* > *m*. For example, the total number of unknown parameters *m* may be three or more, in which case the total number of sensors *m* is four or more. Consequently, it is possible to identify any inconsistency in the measurements.

At **406,** an estimated value for each of the first and second unknown motion parameters is determined based on the received measurements. For example, an estimate ***x̂*** of the unknown motion parameters can be determined based on equations (6) and (7), or in any other suitable manner known in the art. In particular, using the pseudo inverse of the measurement matrix *C*, an estimation of each of the one or more unknown motion parameters can be obtained.

At **408,** a residual between the estimated values and the received measurements is determined. For example, the measurement residual ***ε***_{y} between the estimate ***x̂*** and the received measurements ***y*** can be determined based on equation (9) , or in any other suitable manner known in the art. In the case that the estimate ***x̂*** is a least squares estimation the unknown motion parameters, the residual represents a least squares error of the system.

At **410,** the presence of one or more outliers in the plurality of measurements is determined (or detected). For example, the presence of one or more outliers in the plurality of measurements is determined if the determined residual fails to meet an acceptance criterion, e.g. falling above (or below) a threshold. The comparison of the measurement residual ***ε***_{y} to an acceptance criterion can be performed in any suitable manner. For example, the largest element and/or the norm of the measurement residual ***ε***_{y} can be compared to a threshold and, if it exceeds (or not) the threshold, an outlier is detected. In another example, outliers can be detected based on a statistical analysis of the measurement residual ***ε**_{y}*. If the measurement residual ***ε***_{y} meet an acceptance criterion, the estimate ***x̂*** can be provided as output and it can be stated that there is no outlier in the measurements. If the measurement residual ***ε**_{y}* is not acceptable, further action can be taken, for example by discounting the estimate ***x̂***, notifying that maintenance of the sensors is required, and the like.

In some examples, at **412,** one or more outliers in the plurality of measurements are identified, i.e. a specific measurement that is considered to be an outlier can be identified, rather than just determining that it is present somewhere in the system. For example and as discussed above, measurements may be received from each of three or more data sources. Here, the total number of data sources is at least two more than the total number of unknown motion parameters. A plurality of subsets of the received measurements, wherein each subset omits one of the received measurements, and an estimate *x̂^{j}* of the unknown motion parameters in each subset, are determined. A corresponding measurement residual ***ε**_{y}^{j}* between the estimate **x̂***^{j}* and the subset of measurements is then determined, and identity of any outlier(s) in the system can be determined based on the determined residuals ***ε**_{y}^{j}*.

In some examples, at **414,** information relating to the one or more identified outliers, for example its existence, identity, the erroneous value, and/or an indication that maintenance of a sensor is required can be transmitted to an operator of the vehicle **100.** Similarly, an estimate of motion of the vehicle **100** can be transmitted to the operator. If the initial measurement residual ***ε**_{y}* is acceptable, the initial estimate ***x̂*** can be transmitted and it can be stated that there is no outlier in the measurement. If an outlier is identified, the subset having the best measurement residual ***ε**_{y}^{j}* can be transmitted. For example, the information relating to the one or more identified outliers and/or an estimate of vehicle motion can be provided via a user interface for an operator of the vehicle **100.**

In some examples, at **416,** an action by a motion management system of the vehicle can be caused in response to determining the presence of one or more outliers. For example, the initial estimate ***x̂*** can be discounted, and vehicle motion can be estimated based on other inputs, or it may be determined that vehicle control is not possible based on the initial estimate ***x̂***, and a driver input is required.

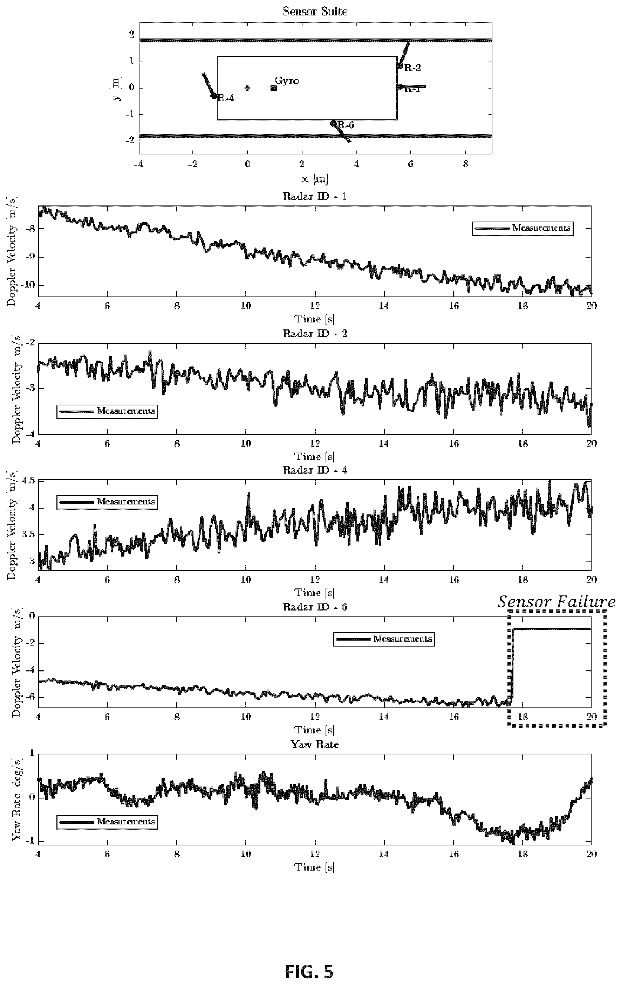

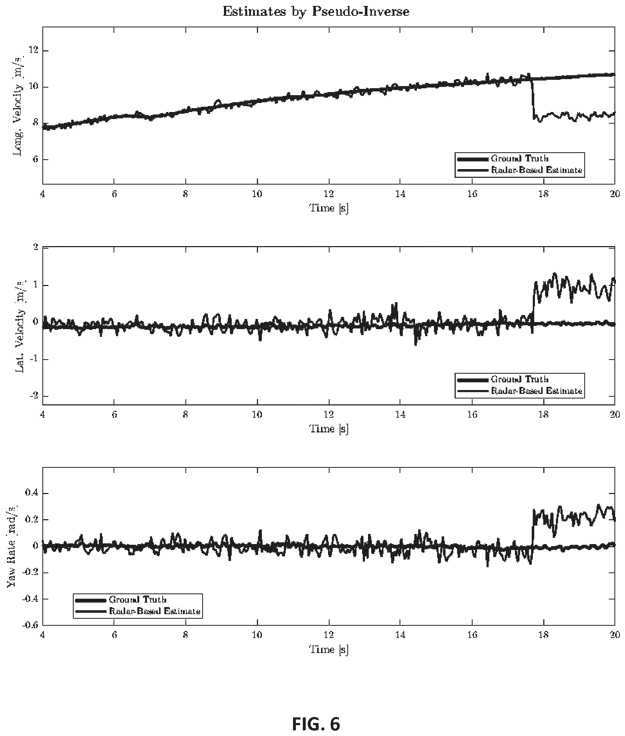

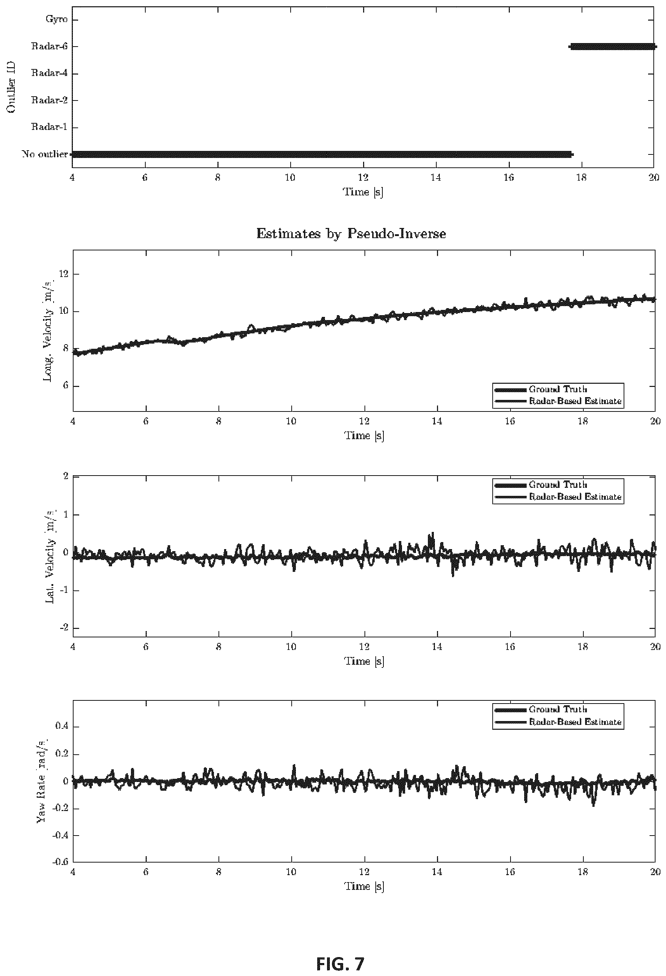

**FIG. 5** illustrates the results of testing of a vehicle motion estimation system comprising four radar sensors measuring Doppler velocity and a gyroscope observing yaw rate. In the testing, the ego vehicle moves along a straight line while there is a snowplough operating nearby. Most likely due to the dense layer of snow particles in the air, Radar-6 generates erroneous measurements towards the end of testing period. The motion estimates obtained by a standard LSE algorithm by processing all available measurements without any outlier identification/rejection mechanism are shown in **FIG. 6.** As can be clearly seen, after Radar-6 starts reporting outlier measurements, the accuracy of the estimates degrades. **FIG. 7** illustrates the motion estimates obtained by excluding the identified outliers as proposed in this disclosure. As can be clearly seen, the disclosed approach can satisfactorily identify the outlier measurement and maintain proper estimates without any loss in performance.

In some examples, additional approaches to determining the presence of an outlier may be used. For example, outliers from the radar sensor(s) **210** may be detected by comparing an actual range-Doppler appearance to an expected range-Doppler appearance of the output of each radar sensor **210** given the estimated motion. Ground speed radars, for example, are expected to generate a particular pattern in range-Doppler velocity maps due to the characteristics of the sensor-road geometry, as known in the art. Therefore, at each measurement scan, it is possible to analyse if this pattern is not clearly available or significantly corrupted. If such a condition is identified, the sensor can potentially defer generating a Doppler velocity measurement or inform the end-user that the corresponding measurement is not reliable. This approach essentially leads to a setup in which each sensor assures the integrity of its outputs. Further operations can optionally be conducted to assess the consistency of different sensor outputs. In some examples, the output from the inertial sensor(s) **220** may be trusted and any discrepancy between the output of the inertial sensor(s) **220** and a corresponding estimation from the radar sensor(s) **210** can be used to detect outliers in the radar sensor(s) **210.**

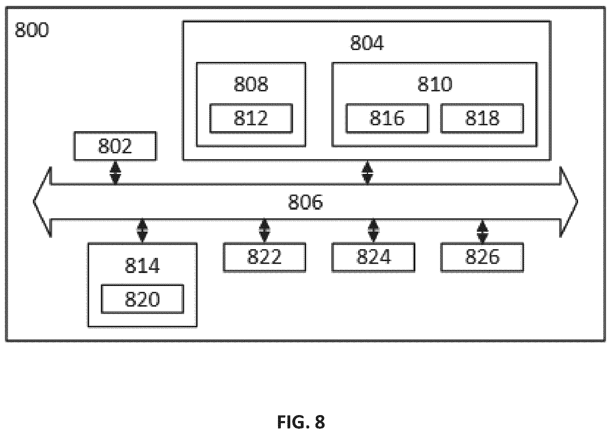

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A system (200) comprising:
one or more radar sensors (210) configured to obtain measurements relating to one or more first unknown motion parameters of a vehicle (100);
one or more inertial sensors (220) configured to obtain measurements relating to one or more second unknown motion parameters of the vehicle (100), wherein the total number of sensors (210, 220) is at least one more than the total number of unknown motion parameters; and
processing circuitry (150, 170, 230) configured to:
acquire a measurement of each of the first unknown motion parameters from the one or more radar sensors (210);
acquire a measurement of each of the second unknown motion parameters from the one or more inertial sensors (220);
determine an estimated value for each of the first and second unknown motion parameters based on the received measurements;
determine a residual between the estimated values and the received measurements; and
determine the presence of one or more outliers in the plurality of measurements if the determined residual fails to meet an acceptance criterion.

2. The system (200) of claim 1, wherein the one or more radar sensors (210) comprise one or more ground speed radar sensors.

3. The system (200) of any preceding claim, wherein the first unknown motion parameters comprise one or more of a longitudinal velocity of the vehicle (100), a lateral velocity of the vehicle (100), a vertical velocity of the vehicle (100), a yaw rate of the vehicle (100), a roll rate of the vehicle (100), and a pitch rate of the vehicle (100).

4. The system (200) of any preceding claim, wherein the second unknown motion parameters comprise one or more of a yaw rate of the vehicle (100), a roll rate of the vehicle (100), and a pitch rate of the vehicle (100).

5. The system (200) of any preceding claim, wherein the processing circuitry (150, 170, 230) is configured to acquire a measurement from each of the sensors (210, 220).

6. The system (200) of any preceding claim, wherein the received measurements are obtained by the sensors (210, 220) at a same time instant.

7. The system (200) of any preceding claim, wherein the processing circuitry (150, 170, 230) is configured to determine the estimated value for each of the one or more unknown motion parameters using a pseudo inverse of a measurement matrix.

8. The system (200) of any preceding claim, wherein each subset of a measurement matrix, which omits one of the received measurements, has full column rank.

9. The system (200) of any preceding claim, comprising three or more sensors (210, 220), wherein the processing circuitry (150, 170, 230) is configured to:
receive a measurement from each of the three or more sensors (210, 220), wherein the total number of sensors is at least two more than the total number of unknown motion parameters;
determine a plurality of subsets of the received measurements, wherein each subset omits one of the received measurements;
determine an estimated value for each of the first and second unknown motion parameters for each determined subset of the received measurements;
determine a residual between the respective estimated values and each determined subset of the received measurements; and
identify one or more outliers in the plurality of measurements based on the determined residuals.

10. The system (200) of any preceding claim, wherein the processing circuitry (150, 170, 230) is further configured to provide one or more of information relating to the one or more identified outliers and an estimate of vehicle motion via a user interface for an operator of the vehicle (100).

11. The system (200) of any preceding claim, wherein the processing circuitry (150, 170, 230) is further configured to cause an action by a motion management system (140, 160) of the vehicle (100) in response to determining the presence of one or more outliers.

12. A vehicle (100) comprising the system (200) of any preceding claim.

13. A computer-implemented method (400) comprising:
acquiring (402), by processing circuitry (150, 170, 230) of a computer system (140, 160, 200), a measurement of each of one or more first unknown motion parameters of a vehicle (100) based on one or more radar sensors (210);
acquiring (404), by the processing circuitry (150, 170, 230), a measurement of each of one or more second unknown motion parameters of the vehicle (100) based on one or more inertial sensors (220), wherein the total number of sensors (210, 220) is at least one more than the total number of unknown motion parameters;
determining (406), by the processing circuitry (150, 170, 230), an estimated value for each of the first and second unknown motion parameters based on the received measurements;
determining (408), by the processing circuitry (150, 170, 230), a residual between the estimated values and the received measurements; and
determining (410), by the processing circuitry (150, 170, 230), the presence of one or more outliers in the plurality of measurements if the determined residual fails to meet an acceptance criterion.

14. A computer program product comprising program code for performing, when executed by processing circuitry (150, 170, 230), the computer-implemented method (400) of claim 13.

15. A non-transitory computer-readable storage medium comprising instructions, which when executed by processing circuitry (150, 170, 230), cause the processing circuitry (150, 170, 230) to perform the computer-implemented method (400) of claim 13.

## Patentansprüche

1. Ein System (200), umfassend:
einen oder mehrere Radarsensoren (210), die dazu ausgelegt sind, Messungen zu erhalten, die sich beziehen auf einen oder mehrere erste unbekannte Bewegungsparameter eines Fahrzeugs (100);
einen oder mehrere Trägheitssensoren (220), die dazu ausgelegt sind, Messungen zu erhalten, die sich beziehen auf einen oder mehrere zweite unbekannte Bewegungsparameter des Fahrzeugs (100), wobei die Gesamtanzahl von Sensoren (210, 220) mindestens um eins größer ist als die Gesamtzahl unbekannter Bewegungsparameter; und
Verarbeitungsschaltungsanordnung (150, 170, 230), die dazu ausgelegt ist:
eine Messung jedes der ersten unbekannten Bewegungsparameter zu erfassen von dem einen oder den mehreren Radarsensoren (210);
eine Messung jedes der zweiten unbekannten Bewegungsparameter von dem einen oder den mehreren Trägheitssensoren (220) zu erfassen;
einen geschätzten Wert für jeden der ersten und zweiten unbekannten Bewegungsparameter auf Grundlage der empfangenen Messungen zu bestimmen;
ein Residuum zwischen den geschätzten Werten und den empfangenen Messungen zu bestimmen; und
das Vorhandensein eines oder mehrerer Ausreißer in der Vielzahl von Messungen zu bestimmen, wenn das bestimmte Residuum ein Akzeptanzkriterium nicht erfüllt.

2. System (200) nach Anspruch 1, wobei der eine oder die mehreren Radarsensoren (210) einen oder mehrere Bodenradarsensoren umfassen.

3. System (200) nach einem der vorhergehenden Ansprüche, wobei die ersten unbekannten Bewegungsparameter eines oder mehrere aus einer Längsgeschwindigkeit des Fahrzeugs (100), einer Quergeschwindigkeit des Fahrzeugs (100), einer Vertikalgeschwindigkeit des Fahrzeugs (100), einer Gierrate des Fahrzeugs (100), einer Rollrate des Fahrzeugs (100) und einer Nickrate des Fahrzeugs (100) umfassen.

4. System (200) nach einem der vorhergehenden Ansprüche, wobei die zweiten unbekannten Bewegungs parameter eines oder mehrere aus einer Gierrate des Fahrzeugs (100), einer Rollrate des Fahrzeugs (100) und einer Nickrate des Fahrzeugs (100) umfassen.

5. System (200) nach einem der vorhergehenden Ansprüche, wobei die Verarbeitungsschaltungsanordnung (150, 170, 230) dazu konfiguriert ist, von jedem der Sensoren (210, 220) eine Messung zu erfassen.

6. Das System (200) nach einem der vorhergehenden Ansprüche, wobei die empfangenen Messungen von den Sensoren (210, 220) zu einem gleichen Zeitpunkt erhalten werden.

7. Das System (200) nach einem der vorhergehenden Ansprüche, wobei die Verarbeitungsschaltung (150, 170, 230) dazu konfiguriert ist, den geschätzten Wert für jeden der einen oder mehreren unbekannten Bewegungsparameter unter Verwendung einer Pseudoinverse einer Messmatrix zu bestimmen.

8. Das System (200) nach einem der vorhergehenden Ansprüche, wobei jede Teilmenge einer Messmatrix, die eine der empfangenen Messungen auslässt, vollen Spaltenrang aufweist.

9. Das System (200) nach einem der vorhergehenden Ansprüche, umfassend drei oder mehr Sensoren (210, 220), wobei die Verarbeitungsschaltung (150, 170, 230) dazu konfiguriert ist:
von jedem der drei oder mehr Sensoren (210, 220) eine Messung zu empfangen, wobei die Gesamtanzahl von Sensoren mindestens zwei größer ist als die Gesamtanzahl von unbekannten Bewegungsparameter;
eine Vielzahl von Teilmengen der empfangenen Messungen zu bestimmen, wobei jede Teilmenge eine der empfangenen Messungen auslässt;
einen geschätzten Wert für jeden der ersten und zweiten unbekannten Bewegungsparameter für jede bestimmte Teilmenge der empfangenen Messungen zu bestimmen;
ein Residuum zwischen den jeweiligen geschätzten Werten und jeder bestimmten Teilmenge der empfangenen Messungen zu bestimmen; und
einen oder mehrere Ausreißer in der Vielzahl von Messungen auf der Grundlage der bestimmten Residuen zu identifizieren.

10. Das System (200) nach einem der vorstehenden Ansprüche, wobei die Verarbeitungsschaltung (150, 170, 230) ferner so konfiguriert ist, dass sie eine oder mehrere der folgenden Informationen bereitstellt: Informationen bezüglich des einen oder der mehreren identifizierten Ausreißer und eine Schätzung der Fahrzeugbewegung über eine Benutzerschnittstelle für einen Fahrer des Fahrzeugs (100).

11. Das System (200) nach einem der vorhergehenden Ansprüche, wobei die Verarbeitungsschaltung (150, 170, 230) ferner dazu konfiguriert ist, eine Aktion durch ein Bewegungsmanagementsystem (140, 160) des Fahrzeugs (100) als Reaktion auf das Bestimmen des Vorliegens eines oder mehrerer Ausreißer zu bewirken.

12. Ein Fahrzeug (100), umfassend das System (200) nach einem der vorhergehenden Ansprüche.

13. Ein computerimplementiertes Verfahren (400), umfassend:
Erfassen (402), durch eine Verarbeitungsschaltung (150, 170, 230) eines Computersystems (140, 160, 200), eine Messung jedes von einem oder mehreren ersten unbekannten Bewegungsparametern eines Fahrzeugs (100) auf der Grundlage von einem oder mehreren Radarsensoren (210);
Erfassen (404), durch die Verarbeitungsschaltung (150, 170, 230), einer Messung jedes von einem oder mehreren zweiten unbekannten Bewegungsparametern des Fahrzeugs (100) auf der Grundlage von einem oder mehreren Trägheitssensoren (220), wobei die Gesamtanzahl von Sensoren (210, 220) um mindestens eins größer ist als die Gesamtanzahl von unbekannten Bewegungsparametern;
Bestimmen (406), durch die Verarbeitungsschaltung (150, 170, 230), eines geschätzten Werts für jeden der ersten und zweiten unbekannten Bewegungsparameter auf der Grundlage der empfangenen Messungen;
Bestimmen (408), durch die Verarbeitungsschaltung (150, 170, 230), eines Residuums zwischen den geschätzten Werten und den empfangenen Messungen; und
Bestimmen (410), durch die Verarbeitungsschaltung (150, 170, 230), des Vorliegens von einem oder mehreren Ausreißern in der Vielzahl von Messungen, wenn das bestimmte Residuum nicht ein Akzeptanzkriterium erfüllt.

14. Ein Computerprogrammprodukt, umfassend Programmcode zum Durchführen, wenn ausgeführt durch eine Verarbeitungsschaltung (150, 170, 230), des computerimplementierten Verfahrens (400) nach Anspruch 13.

15. Ein nichtflüchtiges computerlesbares Speichermedium, umfassend Anweisungen, welche bei Ausführung durch eine Verarbeitungsschaltung (150, 170, 230) die Verarbeitungsschaltung (150, 170, 230) veranlassen, das computerimplementierte Verfahren (400) nach Anspruch 13 durchzuführen.

## Revendications

1. Un système (200) comprenant :
un ou plusieurs capteurs radar (210) configurés pour obtenir des mesures relatives à un ou plusieurs premiers paramètres de mouvement inconnus d'un véhicule (100) ;
un ou plusieurs capteurs inertiels (220) configurés pour obtenir des mesures relatives à un ou plusieurs seconds paramètres de mouvement inconnus du véhicule (100), dans lequel le nombre total de capteurs (210, 220) est supérieur d'au moins un au nombre total de paramètres de mouvement inconnus; et
une circuiterie de traitement (150, 170, 230) configurée pour :
acquérir une mesure de chacun des premiers paramètres de mouvement inconnus à partir des un ou plusieurs capteurs radar (210) ;
acquérir une mesure de chacun des seconds paramètres de mouvement inconnus à partir des un ou plusieurs capteurs inertiels (220) ;
déterminer une valeur estimée pour chacun des premiers et seconds paramètres de mouvement inconnus sur la base des mesures reçues ;
déterminer un résidu entre les valeurs estimées et les mesures reçues ; et
déterminer la présence d'une ou plusieurs valeurs aberrantes dans la pluralité de mesures si le résidu déterminé ne satisfait pas à un critère d'acceptation.

2. Le système (200) selon la revendication 1, dans lequel les un ou plusieurs capteurs radar (210) comprennent un ou plusieurs capteurs radar de vitesse au sol.

3. Le système (200) selon l'une quelconque revendication précédente, dans lequel les premiers paramètres de mouvement inconnus comprennent un ou plusieurs parmi une vitesse longitudinale du véhicule (100), une vitesse latérale du véhicule (100), une vitesse verticale du véhicule (100), une vitesse de lacet du véhicule (100), une vitesse de roulis du véhicule (100), et une vitesse de tangage du véhicule (100).

4. Le système (200) selon l'une quelconque revendication précédente, dans lequel les seconds paramètres de mouvement inconnus comprennent un ou plusieurs parmi une vitesse de lacet du véhicule (100), une vitesse de roulis du véhicule (100), et une vitesse de tangage du véhicule (100).

5. Le système (200) selon l'une quelconque revendication précédente, dans lequel la circuiterie de traitement (150, 170, 230) est configurée pour acquérir une mesure provenant de chacun des capteurs (210, 220).

6. Le système (200) selon l'une quelconque revendication précédente, dans lequel les mesures reçues sont obtenues par les capteurs (210, 220) au même instant temporel.

7. Le système (200) selon l'une quelconque revendication précédente, dans lequel la circuiterie de traitement (150, 170, 230) est configurée pour déterminer la valeur estimée pour chacun des un ou plusieurs inconnus paramètres de mouvement en utilisant une pseudo-inverse d'une matrice de mesures.

8. Le système (200) selon l'une quelconque revendication précédente, dans lequel chaque sous-ensemble d'une matrice de mesures, qui omet l'une des mesures reçues, est de plein rang colonne.

9. Le système (200) selon l'une quelconque revendication précédente, comprenant trois capteurs ou plus (210, 220), dans lequel la circuiterie de traitement (150, 170, 230) est configurée pour :
recevoir une mesure provenant de chacun des trois capteurs ou plus (210, 220), dans lequel le nombre total de capteurs est au moins supérieur de deux au nombre total de paramètres de mouvement inconnus ;
déterminer une pluralité de sous-ensembles des mesures reçues, dans lequel chaque sous-ensemble omet l'une des mesures reçues ;
déterminer une valeur estimée pour chacun des premier et deuxième inconnus paramètres de mouvement pour chaque sous-ensemble déterminé des mesures reçues ;
déterminer un résidu entre les valeurs estimées respectives et chaque sous-ensemble déterminé des mesures reçues ; et
identifier une ou plusieurs valeurs aberrantes dans la pluralité de mesures sur la base des résidus déterminés.

10. Le système (200) selon l'une quelconque revendication précédente, dans lequel la circuiterie de traitement (150, 170, 230) sont en outre configurés pour fournir, via une interface utilisateur destinée à un conducteur du véhicule (100), une ou plusieurs informations relatives à la ou aux valeurs aberrantes identifiées, ainsi qu'une estimation du mouvement du véhicule.

11. Le système (200) selon l'une quelconque revendication précédente, dans lequel la circuiterie de traitement (150, 170, 230) est en outre configurée pour provoquer une action par un système de gestion de mouvement (140, 160) du véhicule (100) en réponse à la détermination de la présence d'une ou plusieurs valeurs aberrantes.

12. Un véhicule (100) comprenant le système (200) selon l'une quelconque revendication précédente.

13. Un procédé mis en œuvre par ordinateur (400) comprenant :
l'acquisition (402), par une circuiterie de traitement (150, 170, 230) d'un système informatique (140, 160, 200), une mesure de chacun d'un ou plusieurs premiers paramètres de mouvement inconnus d'un véhicule (100) sur la base d'un ou plusieurs capteurs radar (210) ;
l'acquisition (404), par les circuits de traitement (150, 170, 230), d'une mesure de chacun d'un ou plusieurs seconds paramètres de mouvement inconnus du véhicule (100) sur la base de un ou plusieurs capteurs inertiels (220), dans lequel le nombre total de capteurs (210, 220) est d'au moins un supérieur au nombre total de paramètres de mouvement inconnus ;
la détermination (406), par les circuits de traitement (150, 170, 230), d'une valeur estimée pour chacun des premiers et seconds paramètres de mouvement inconnus sur la base des mesures reçues ;
la détermination (408), par les circuits de traitement (150, 170, 230), d'un résidu entre les valeurs estimées et les mesures reçues ; et
la détermination (410), par les circuits de traitement (150, 170, 230), de la présence de une ou plusieurs valeurs aberrantes dans la pluralité de mesures si le résidu déterminé ne parvient pas à satisfaire à un critère d'acceptation.

14. Un produit programme informatique comprenant un code de programme pour effectuer, lorsqu'il est exécuté par des circuits de traitement (150, 170, 230), le procédé mis en œuvre par ordinateur (400) de la revendication 13.

15. Un support de stockage non transitoire lisible par ordinateur comprenant des instructions qui, lorsqu'elles sont exécutées par des circuits de traitement (150, 170, 230), amènent les circuits de traitement (150, 170, 230) à effectuer le procédé mis en œuvre par ordinateur (400) de la revendication 13.
